# EUROPEAN PATENT SPECIFICATION

(11) **EP 1 609 325 B1**
(45) Date of publication and mention of the grant of the patent: **02.01.2013**
(21) Application number: 03816510.6
(22) Date of filing: 03.04.2003
(51) Int. Cl.: H04L 29/06, H04W 12/06, G06Q 30/02

(54) **NETWORK SERVING DEVICE, SYSTEM AND METHODS FOR MEDIATING NETWORKED SERVICES**
NETZWERKVERSORGUNGSEINRICHTUNG, SYSTEM UND VERFAHREN ZUM AUSHANDELN VERNETZTER DIENSTE
DISPOSITIF SERVEUR DE RESEAU, SYSTEME ET PROCEDES ASSURANT LA MEDIATION DE SERVICES OFFERTS PAR UN RESEAU

(43) Date of publication of application: 28.12.2005
(73) Proprietor: Nokia Corporation, 02150 Espoo (FI)
(72) Inventor: WAKIM, Peter, Boston MA 02116 (US); KÜHL, Carmen, 44139 Dortmund (DE); VESIKIVI, Petri, FIN- 02660 Espoo (FI); HUOMO, Heikki, FIN-02320 Espoo (FI)
(74) Representative: Vogelbruch, Fabian
(86) International application number: PCT/IB2003/001213
(87) International publication number: WO 2004/089016

(56) References cited:
- WO-A2-03/007623
- GB-A- 2 375 265
- US-A1- 2002 139 859
- US-A1- 2002 184 332
- US-A1- 2003 038 172

## Description

The present invention relates to a mediating service which mediates and switches, respectively, networked services between a portable electronic device and service providers operating the networked services. In particular, the present invention relates to a mediating service provider which operates the mediating of the networked services on the basis of information retrieved from a RFID tag.

Radio frequency identification (RFID) transponders also referred to as RFID tags are widely used for labeling objects, to establish person's identities and to recognize objects provided with RFID tags. Basically, RFID tags include an electronic circuit and a radio frequency (RF) interface coup led to an antenna contained in a small container. Passive RFID tags are activated by a RFID tag reader which generates an interrogation signal, for example an RF signal at a certain frequency. Active RFID tags comprise a power supply such as a battery for energizing the electronic components.

Passive inductive RFID tags are energized by passing through an energizing electromagnetic field, i.e. the interrogation signal. The RFID tags resonate at a frequency of the electromagnetic field which causes interference in the electromagnetic field which can be detected and evaluated by the RFID tag reader. The amount of information which can be provided by passive inductive RFID tags and their transmission range is limited.

Passive or active back scatter RFID tags reflect a small amount of the electromagnetic energy of an interrogation signal radiated by the RFID tag reader. The reflected signal can be modulated or encoded in any way to embed RFID tag information stored in the RFID tag to be transmitted to the RFID tag reader. In detail, back scatter RFID tags receive the electromagnetic energy of the interrogation signal and convert a small amount of the electromagnetic energy for energizing the electronic components of the RFID tag. The RFID tag components can generate a data stream comprising a clock signal and stored RFID tag information to be modulated or encoded on the reflected signal.

Two-way active RFID tags include a miniaturized transceiver and conventionally a based on microprocessor technology. Two-way active RFID tags may be polled for data transmission or may transmit in a self-controlled way. The microprocessor technology allows to perform software algorithms for parsing received (interrogation) RF signals and for generating corresponding RF response signals.

Back scatter RFID tags and two-way RFID tags allow to provide a larger amount of information and have a longer transmission range. Depending on the complexity of the RFID tags the information stored non-volatile in the RFID tags may be read-only information or is modifiable (re-programmable) by the RFID tag reader.

RFID tags are used in numerous application fields such as information storage devices allowing wireless read-out access. In detail application fields may comprise electronic article surveillance (EAS), storage administration systems, anti-theft systems, access controls, identification systems (persons, pets, wild life, children etc.), toll collection, traffic management systems, rail car identification, high value asset controls and the like. The fields of applications are not limited to the given enumeration. The operation frequency of RFID tags lies within a frequency range of several kilohertz up to several gigahertz. The RFID tags may have various containers which are adopted to the purpose and application of the RFID tags. RFID tags used as key replacement for accessing controlled area like an office block may be integrated in a key fob or may have credit card shape for being accommodated in a pocket. Moreover RFID tags may be provided with adhesives or fixed onto adhesive labels, films etc. to be applied on articles, products etc.

The market of microprocessor based portable terminals is still growing fast and the acceptance of mobile terminal is undiminished. Portable terminals device offer the ability to a user to retrieve, process, modify and add informational data at any place at any time. The capabilities regarding storage capability and processing capability is limited in comparison to desktop systems. Portable terminals having data wireless communication functionality overcome the capability limitations for example by employing wireless connected data storage devices.

Moreover, portable terminals which include a RFID tag reader are well known in the art. Such mobile terminals are able to receive the RFID tag information for further processing. For example, a portable terminal may be employed to receive RFID tag information of RFID tags substituting the bar codes used to label uniquely products. Furthermore, the read out RFID tag information may be employed to request further information of a scanned product by establishing a communication link to an external information service, e.g. via the internet. Therefore, the RFID tag information comprises a product identification which identifies the product to the information service and eventually a tag identification sequence which defines access related information to allow the portable terminal to establish the communication link to the information service for transmitting the product identification and to receive an expected product information response. As an example, a RFID tags which is attached to a product and substitutes the classical bar code which is conventionally used today for product identification purposes in storage administration system and pay desk systems may store a production identification in conjunction with a universal resource locator sequence which defines an address of a production information service. A portable terminal having RFID tag reader capability uses the stored information to retrieve the additional product information.

A drawback of the enlightened use of RFID tag information which is employed to retrieve additional information from an external information service is that each RFID tag provides a RFID tag information which is dedicated to one distinct purpose, i.e. the RFID tag information is limited to be used for one pre-defined service (purpose). A further drawback is given in case a RFID tag information comprises additionally access related information to allow establishing the access to the information such as the aforementioned example which purposes to co-code a service address on the basis of a universal resource locator (URL). Whenever the service or the service addressing is modified or moved, precautions have to be taken, to ensure that the RFID tag information is still useable and legal, respectively, since otherwise all RFID tags containing this RFID tag information have to be replaced or re-programmed.

Document GB 2 375 265 A discloses a gateway device, comprising a receiver to receive an incoming message containing at least identifying information specific to a user and a code specific to a product or service, a first processor to identify the user from the identifying information, a second processor to identify a supplier of the product or service from the code, and an order generator to send an outgoing message to the supplier of the product or service, the outgoing message containing one or more details of the user. Typical applications include ordering products to be sent to a different address, ordering copies of articles from publishers, purchasing telephone ring tones, voting in elections, entering competitions and joining societies, the facility being available for the costs to be added to the subscriber telephone account.

The object of the present invention is, to provide a method and devices to grant access to information services in an advantageous manner to overcome the disadvantages of the aforementioned state of the art application of RFID tag information.

The concept of the present invention provides a method which allows to embed a tag identification sequence addressing a plurality of services into a RFID tag information, wherein the contained tag identification sequence addresses a plurality of individual services. The RFID tag information is attached to an interposed mediating service which manages the assignment of services to the RFID tag on the basis of the stored RFID tag information. Moreover the interposed mediating service supports user subscription management, i.e. a selection of individual user desired services out of a plurality of services is operated with respect to user subscription information pre-defined and provided by a user. The use of one RFID tag containing such a tag identification sequence allows to reduce the number of RFID tags due to the fact that, when employing the purposed invention, numerous RFID tags can be replaced by a single RFID tags which allows to obtain the same information.

The object of the present invention is achieved with a network serving device as defined in claim 1, a system defined in claim 5 and methods as defined in claim 6 and claim 10.

In accordance with an aspect of the present invention, a network serving device for mediating networked services is provided. The network serving device comprises at least an interface component and a selection component. The interface component is adapted to receive a service request message from a portable, electronic terminal. The request message comprises a subscriber identification and a tag identification sequence which has been obtained from a RFID tag which is connected to the portable, electronic terminal. The selection component serves to select one or more individual services on the basis of the tag identification sequence and with respect to the subscriber identification. The interface component finally provides for an initiation of the one or more selected individual services such that the one or more selected individual services are established between the portable, electronic terminal and at least one tag service provider associated to the said one or more selected individual services to operate accordingly the one or more selected individual services.

In accordance with the present invention, the selection component comprises in detail a service retrieving component, a subscription retrieving component and a checking component. The service retrieving component is adapted to retrieve service information about one or more individual services which are identified by the tag identification sequence. The subscription retrieving component is able to retrieve a subscription information which is identified by the subscriber identification. The checking component compares the service information about the one or more identified individual services and the retrieved subscription information. The service information and the subscription information comprise characterization information on the basis of which the comparison can be performed. The comparison results in one or more selected individual services. It shall be noted, that the resulting one or more selected individual services may also include one or more individual services for which a subscription of the user is not necessary, i.e. which are freely accessible.

In accordance with an embodiment of the present invention, the service retrieving component is adapted to access a service data storage and the subscription retrieving component is adapted to access a subscription data storage. The service data storage as well as the subscription data storage may be one or more databases. The service data storage comprises information which allows to assign tag information sequences to lists of individual services, preferably managed by a mapping table to allow for retrieval of service information about one or more individual services by the means of a tag information sequence. The subscription data storage comprises information which allows to assign subscriber identifications to lists of subscription information, preferably managed by a mapping table to allow for retrieval of the subscription information by the means of a subscriber identification.

In accordance with an embodiment of the present invention, the subscription information comprises at least a classification definition by the means of which a list of services can be classified. The classification definition is employed to be compared with the service information to obtain the one or more selected individual services.

In accordance with an embodiment of the present invention, the interface component transmits at least one initiation message to the at least one tag service provider to establish data communication of the selected services between the tag service provider and the portable, electronic terminal.

The portable, electronic terminal may be a terminal enhanced with a wireless communication interface or a terminal enhanced with a mobile communication interface, respectively, which are suitable to communicate with the network serving device and the tag service providers.

The portable, electronic terminal comprises at least a subscriber identification, a generating component and an interface component. A RFID tag reader is connected to the portable, electronic terminal as a built-in module or as an externally connected module. The RFID tag reader is employed to receive at least a tag identification sequence from a RFID tag and supplies the received information to the portable, electronic terminal. The generating component generates a service request message in accordance with said tag identification sequence and the subscriber identification e.g. which is stored in the portable, electronic terminal and in a storage component thereof, respectively. This service request message is transmitted via the interface component to a mediating service provider. The mediating service provider is adapted to establish a connection between the portable, electronic terminal and at least one tag service provider which is associated to one or more subscribed individual services. The mediating service provider processes the information contained in the service request message for selecting the one or more individual services to which a user of the portable, electronic terminal is subscribed.

In accordance with an embodiment of the present invention, the RFID tag reader is further adapted to receive the tag identification sequence and a communication related data. The communication related data may comprise information concerning the message type, message coding, message protocol and transmission requirements. The generating component is adapted to generate the service request message by taking into account the communication related data and the interface component is adapted to transmit the service request message by cons idering the communication related data.

In accordance with an embodiment of the present invention, the interface component receives at least one service response message from the at least one tag service provider in accordance with the one or more subscribed individual services. Information comprised in the received service response messages is displayed via a user interface to a user of the portable, electronic terminal.

The portable, electronic terminal may be a terminal enhanced with a wireless communication interface or a terminal enhanced with a mobile communication interface, respectively, which are suitable to communicate with the network serving device and the tag service providers.

In accordance with an aspect of the present invention, a system for accessing networked services by a portable, electronic terminal is provided. The networked services are mediated by a mediating service provider. The system comprises at least one portable, electronic terminal and a network serving device operated by the mediating service provider.

The portable, electronic terminal comprises at least a subscriber identification, a generating component and an interface component. A RFID tag reader is connected to the portable, electronic terminal as a built-in module or as an externally connected module. The RFID tag reader is employed to receive at least a tag identification sequence which is stored in a RFID tag and supplies the information retrieved from the RFID tag to the portable, electronic terminal. The generating component generates a service request message accordance with said tag identification sequence and a subscriber identification e.g. which is stored in the portable, electronic terminal and in a storage component thereof, respectively. This service request message is transmitted via the interface component to the mediating service provider.

The network serving device operated by the mediating service provider comprises at least an interface component and a selection component. The interface component is adapted to receive the service request message from the portable, electronic terminal. The selection component serves to select one or more individual services on the basis of the tag identification sequence and with respect to the subscriber identification. The interface component finally provides for an initiation of the one or more selected individual services such that the one or more selected individual services are established between the portable, electronic terminal and at least one tag service provider associated to the said one or more selected individual services to operate accordingly the one or more selected individual services which will be the user subscribed services.

In accordance with an embodiment of the present invention, the network serving device operated by the mediating service provider is a network serving device according to an embodiment of the present invention.

In accordance with an aspect of the present invention, a method for mediating networked services by a mediating service provider is provided. A service request message is received from a portable, electronic terminal via a data communication connection. The service request message comprises at least a tag identification sequence and a subscriber identification. The tag identification sequence is originally received from a RFID tag by said portable, electronic terminal. One or more individual services are selected by means of the tag identification sequence and on the basis of the subscriber identification. The mediating service provider further initiates a connection between the portable electronic terminal and at least one tag service provider which is associated with the one or more selected individual services for operating accordingly the one or more selected individual services.

In accordance with the present invention, the selection by the means of the tag identification sequence includes an obtaining of service information about one or more individual services which are referenced by the provided tag identification sequence and an obtaining of subscription information which is associated to the provided subscriber identification. To select the one or more selected individual services the service information is compared with the subscription information to identify matching individual subscribed services. It shall be noted, that the resulting one or more selected individual services may also include one or more individual services for which a subscription of the user is not necessary, i.e. which are freely accessible.

In accordance with an embodiment of the present invention, a service data storage as well as a subscription data storage may be one or more databases. The service data storage comprises information which allows to assign tag information sequences to lists of service information about one or more individual services, preferably managed by a mapping table, to allow for retrieval of service information by the means of a tag information sequence. The subscription data storage comprises information, which allows to assign subscriber identifications to lists of subscription information, preferably managed by a mapping table to allow for retrieval of subscription information by the means of a subscriber identification. The retrieval of the service information is obtained by accessing the service data storage. The retrieval of the subscription information is obtained by accessing the subscription data storage.

In accordance with an embodiment of the present invention, the subscription information comprises art least a classification definition. The classification definition allows to define at last a class of services which comprises one or more individual services.

In accordance with an embodiment of the present invention, an initiation is transmitted to the at least one tag service provider in order to initiate the connection for operating the one or more selected individual services between the portable, electronic terminal and the at least one tag service provider.

In accordance with an aspect of the present invention, a method for accessing networked services by a portable, electronic terminal is provided. At least a tag identification sequence stored in a RFID tag is obtained by a RFID tag reader which is connected to the portable, electronic terminal. A service request message is generated which includes the tag identification sequence and subscriber information which is stored in the portable, electronic terminal and in a storage component thereof, respectively. The service request message is transmitted to a mediating service provider in order to establish a connection between the portable, electronic terminal and at least one tag service provider which is associated to one or more subscribed individual services. The established connection allows to operate the one or more subscribed individual services. The one or more subscribed individual services are selected by the mediating service provider on the basis of the information comprised by the service request message.

In accordance with an embodiment of the present invention, in addition to the tag identification sequence communication related data is received from the radio frequency identification tag by the RFID tag reader. The service request message is generated and transmitted in accordance with said communication related data.

In accordance with an embodiment of the present invention, a service response message according to the one or more selected individual services is received from the at least one tag service provider operating the one or more selected individual services. Information comprised in the service response message may be displayed to the user of the portable, electronic terminal by the means of a user interface.

In accordance with an aspect of the present invention, a method for mediating networked services by a mediating service provider between a portable, electronic terminal and networked services is provided. At least a tag identification sequence stored in a RFID tag is received by a RFID tag reader which is connected to the portable, electronic terminal. A service request message is generated by the portable, electronic terminal, wherein the service request message includes the tag identification sequence and the subscriber information e.g. which is stored in the portable, electronic terminal and a storage component thereof, respectively. The service request message is transmitted via an interface component of the portable, electronic device to a network serving device of the mediating service provider in order to establish a communication between the portable, electronic terminal and at least one tag service provider. The service request message is received by the network serving device of the mediating service provider from the portable, electronic terminal via a data communication connection. The service request message comprises the tag identification sequence and the subscriber identification. One or more individual services are selected by means of the tag identification sequence and on the basis of the subscriber identification. The mediating service provider further initiates the connection between the portable, electronic terminal and the at least one tag service provider which is associated to the one or more selected individual services to operate the one or more selected individual services between the portable, electronic terminal and the at least one tag service provider.

The aforementioned method for mediating networked services by a mediating service provider between a portable, electronic terminal and networked services may further comprise any operation described with respect to any operation of a portable, electronic terminal and any operation of a network serving device according to embodiments of the invention.

According to an aspect of the invention, a software tool for mediating networked services is provided. The software tool comprises program portions for carrying out the operations of the aforementioned methods when the software tool is implemented in a computer program and/or executed.

According to an aspect of the invention, there is provided a computer program product mediating networked services. The computer program comprises program code portions directly loadable into a local memory of a microprocessor based component, processing device, a terminal device, a communication terminal device a serving device or a networked device for carrying out the operations of the aforementioned methods when the program is executed thereon.

According to an aspect of the invention, a computer program product mediating networked services is provided which comprises program code portions stored on a computer readable medium for carrying out the aforementioned methods when the program product is executed on a microprocessor based component, processing device, a terminal device, a communication terminal device a serving device or a networked device.

According to an aspect of the invention a computer data signal is provided which is embodied in a carrier wave and represents instructions which when executed by a processor cause the operations of anyone of the aforementioned methods to be carried out. Thereby Internet applications of the invention are covered.

The accompanying drawings are included to provide a further understanding of the invention and are incorporated in and constitute a part of this specification. The drawings illustrate embodiments of the present invention and together with the description serve to explain the principles of the invention. In the drawings,
- Fig. 1: shows a block diagram illustrating an arrangement comprising a RFID tag, a mobile communication terminal, an interposed mediating service provider having access to a database and a tag service provider which allow to operate the method according to an embodiment of the present invention;
- Fig. 2a: shows a flow diagram illustrating a first operational sequence with respect to a method according to an embodiment of the present invention;
- Fig. 2b: shows a flow diagram illustrating a second operational sequence with respect to a method according to an embodiment of the present invention; and
- Fig. 2c: shows a flow diagram illustrating an alternative operational sequence of Fig. 2b with respect to a method according to an embodiment of the present invention.

Reference will be made in detail to the embodiments of the invention examples of which are illustrated in the accompanying drawings. Wherever possible the same reference numbers are used in the drawings and the description to refer to the same or like parts.

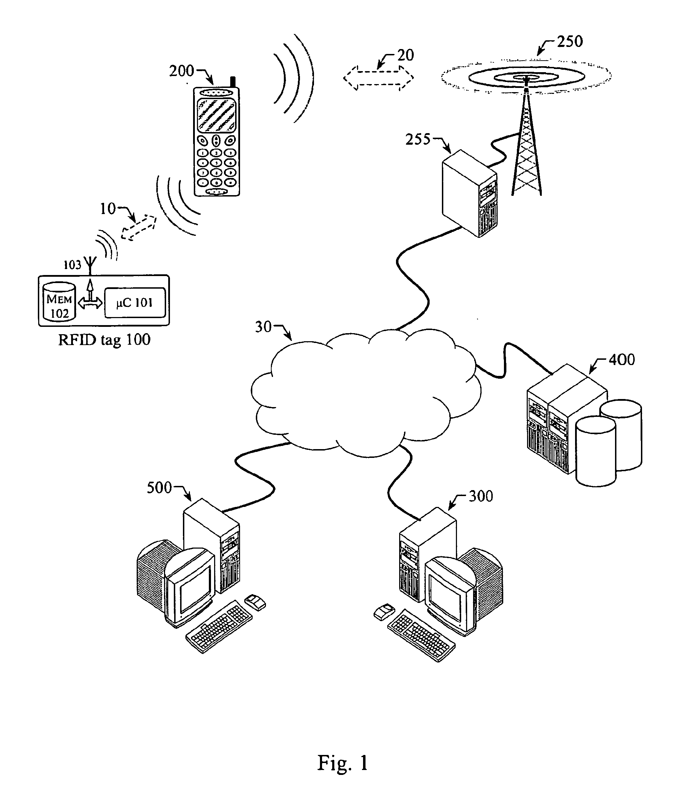

Fig. 1 shows a block diagram illustrating schematically a system of participating components according to an embodiment of the present invention. The illustrated system comprises a RFID tag 100, a portable terminal 200 (and a portable, electronic terminal 200, respectively), a public land mobile network 250, a mediating service provider 300 and a tag service provider 500. Additionally, the illustrated system comprises a dedicated database 400 which the mediating service provider 300 accesses.

The RFID tag 100 illustrated in Fig. 1 includes a storage component (Mem) 102 and a microprocessor or microcontroller (µC) 101. An antenna 103 allows the RFID tag 100 to receive an interrogation signal and to transmit a response signal e.g. on receiving of such an interrogation signal. The storage component 102 contains the RFID tag information which comprises in accordance with the present invention at least a tag identification sequence which is suitable to address a plurality of individual services. The interrogation signal and the response signal are communicated with the portable terminal 200 via the wireless communication link 10 which is a radio frequency communication link. The storage component may be one of a read-only or a read/write (i.e. random access) non-volatile storage component. A storage component implemented as read-only storage component ensures that the RFID tag information stored therein is save against unauthorized modifications. In case a random access storage component is integrated in the RFID tag security issues relating to the information integrity have to be taken into account, e.g. an encryption mechanism may be employed to prevent any unauthorized access to the stored RFID tag information. The illustrated embodiment of the RFID tag 100 is just exemplary. Any implementation of a RFID tag which is able to serve RFID tag information is applicable to the invention.

The portable terminal 200 includes at least a RFID tag reader to retrieve the RFID tag information stored in the RFID tag 100, a processing unit (not shown) such as a microcontroller 101 or a microprocessor to process the RFID tag information received from the RFID tag 100 and a communication interface for exchanging information with the mediating service provider 300 and/or the tag service provider 500. The portable terminal 200 embodied in Fig. 1 includes a mobile communication interface capable to establish a wireless communication link 20 to a mobile communication service provider 255 operating the public land mobile network 250. Alternatively, the portable terminal 200 may include a wireless communication interface such as a wireless local area network (WLAN) interface or a Bluetooth interface which are capable to establish a wireless communication link to a dedicated networked access point device. Data communicated via the wireless communication link 20 to a mobile communication service provider 255 or to a networked access point device are routed by the mobile communication service provider 255 and the networked access point device to an addressed recipient, respectively, such as the mediating service provider 300 or the tag service provider 500 illustrated in Fig. 1.

A huge number of communication techniques can be employed for communicating data among the portable terminal 200 and the mediating service provider 300 and/or the tag service provider 500. Depending on the employed wireless communication environment different communication techniques which are based on different communication protocols may be used. A communication protocol standard which is applicable with nearly all data communication applications is the hypertext transfer protocol (HTTP) which among others allows to request for information which is identified by the means of an addressing coding sequence having a standardized address coding according to the uniform resource locator (URL) or uniform resource identifier (URI). The wireless application protocol (WAP) which is especially used in cellular communication environment is based at a great extend on the hypertext transfer protocol (HTTP) and has been adapted to special requirements faced by cellular communication environment. In view of cellular communications data exchange may be also based on a messaging service provided by the employed cellular communication system. For example GSM systems and related cellular communication system provide a messaging service in accordance with the short message service (SMS) standard, the multimedia message service (MMS) standard and proprietary standards like the Nokia's smart messaging service.

The above presented short description referring to communication techniques is given as an example to enlighten the possibilities but it shall be noted that the invention is not limited to the aforementioned communication techniques. Further communication techniques may also be employed without departing the scope of the present invention.

The portable terminal 200 further includes components which allow to parse the RFID tag information supplied by the RFID tag reader, to generate a service request message in accordance with information resulting from the parsing of the RFID tag information and a component to provide information being received by a service request response in consequence on the originally transmitted service request message.

As illustrated above, the data communicated via the wireless communication link 20 is routed by the mobile communication service provider 255 (or a networked access point routing device) through one or more coupled communication networks 30 to the addressed one or more recipients which may be the mediating service provider 300 and/or the tag service provider 500. The one or more communication networks 30 may be a local area network (LAN), a wide area network (WAN) or a combination thereof. The Internet is a worldwide available wide area network (WAN) and is today used conventionally to couple networked devices over large distances.

The mediating service provider 300 operates a network serving device which is capable to receive messages from the portable terminal 200, especially service request messages containing information provided by the RFID tag obtained by the RFID tag reader of the portable terminal 200 and information available in the portable terminal 200. The mediating service provider 300 further includes components for processing the received messages and generating corresponding messages in accordance with information available by the mediating service provider 300 and the received messages.

The database 400 is operated in conjunction with the service provided by the mediating service provider 300. The database 400 allows the mediating service provider 300 to store and manage information which is required by the service the mediating service provider 300 provides to the user of the wireless communication terminal.

The tag service provider 500 operates analogously to the mediating service provider 300 a network serving device which is capable to receive a tag service request, process correspondingly to the requested tag service to retrieve requested information and to generate a corresponding response for being transmitted to a recipient, i.e. the portable terminal 100 or the mediating service provider 300.

Conventionally, a network serving device includes an information storage or has access to an information storage coupled in any way to the network serving device, a processing unit and a data communication interface for performing the aforementioned operations described in conjunction with the mediating service provider 300 and the tag service provider 500.

The network serving device may be an information server, a WAP server, a WEB server, a database server or any related or similar serving device which is based on a processing unit coupled to an information storage for serving parts of the information. The following description addresses an information service operated by an information server. It shall be understood that the designation service shall be understood as broad as possible. A service provided by a service provider shall cover all cases in which data exchange is initiated by a portable terminal causing data exchange between the portable terminal and any serving device operated by the service provider independently whether the exchanged data relates to application related information, meta-language / markup-language information, database related information etc.

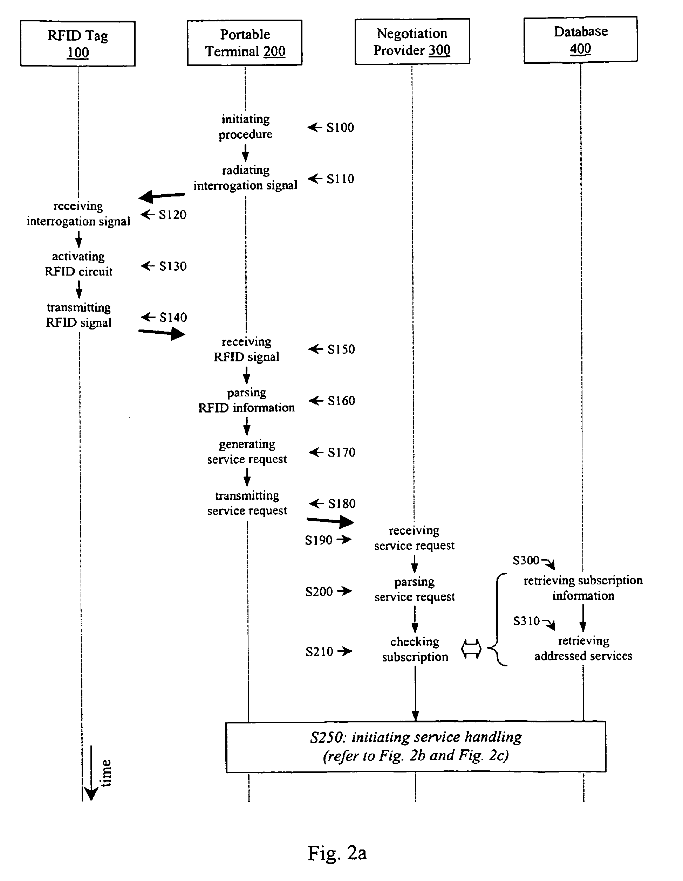

The functionality of the components illustrated in conjunction with the wireless communication device 200, the network serving device of the mediating service provider 300 and the network serving device of the tag service provider 500 will be apparent in view of the following operational sequences described with reference to the Fig. 2a to 2c.

The interacting of the system components which are presented in Fig. 1 will be described in detail in the following Fig. 2a to 2c illustrating operational sequences.

Fig. 2a shows a first flow diagram illustrating an operational sequence of the method according to an embodiment of the present invention.

In an operation S100, the procedure for retrieving information is initiated. The initiation may be operated automatically or may be operated by a user input to the portable terminal 200 which activates a RFID tag reader implemented in the portable terminal 200.

In an operation S110, an interrogation signal is emitted by the RFID tag reader which is implemented in the portable terminal 200 and which is activated after initiation of the procedure for retrieving information. Depending on the type of RFID tag to be activated by the interrogation signal, the signal may be a simple activation signal having a certain frequency or may comprise additional information for the RFID tag, such as an instruction.

In an operation S120, the RFID tag 100 which is within the area irradiated by the RFID tag reader of the portable terminal 200, receives the interrogation signal.

In an operation S130 the RFID Tag 100 is activated. The activated RFID tag re-transmits a response signal on the interrogation signal (S140). The activation of the RFID tag may further comprise a processing operation performed by a processing component of the RFID tag to generate the re-transmitted response signal. On the basis of the example RFID tag 100 illustrated in Fig. 1, the electrical circuit, an integrated circuit (IC), microcontroller or microprocessor 101 may be activated by the interrogation signal of the RFID reader. After activation the microcontroller 101 retrieves the RFID tag information from the storage component 102 and generates the RF response signal which comprises the RFID tag information. Depending on the type of RFID tag the interrogation signal may comprise information or an instruction in accordance to which the microcontroller 101 performs the retrieving of RFID tag information and the generating of the RF response signal. Moreover, the technique of embedding the RFID tag information into the RF response signal may vary among a broad number of different coding and modulation techniques. The detailed operation of RFID tags is out of the scope of the present invention.

In an operation S140, the RF response signal which comprises the RFID tag information is finally radiated via the antenna 103 to be sensed by the RFID reader.

In an operation S 150, the RFID tag reader implemented in the portable terminal 200 receives the RF response signal from the RFID tag which has been activated by radiating the interrogation signal. The RFID reader decodes or extracts the RFID tag information from the RF response signal and passes the obtained RFID tag information to the portable terminal 200 for further processing.

In an operation S160, a parsing component of the portable terminal 200 parses the RFID tag information which is supplied from the RFID tag reader to the parsing component. In accordance to the present invention, the RFID tag information comprises at least one tag identification sequence which identifies the RFID tag itself and services which shall be available in conjunction with the RFID tag being read out. The tag identification sequence allows to take advantages of the individual services. Prerequisites may have to be given to get granted access to one or more of the individual services. The prerequisites will be described below in detail.

The possibility of identifying the RFID tag itself shall allow to conclude in which environment the RFID tag is provided to the user of the portable terminal 200, i.e. at which geographical position the RFID tag can be found. The determination of the geographical position may be based on information stored in a database such as the database 400. The possibility to identify services which are addressed by the RFID tag shall allow to conclude which individual services have been assigned to the single RFID tag. As an example, it shall be assumed that a RFID tag is provided in a main station near a timetable. The geographical position of the RFID tag is correspondingly main station in a certain city and more precisely, the timetable e.g. in the central entrance. Individual services assigned to this RFID tag may be an information service about delays of current train connections, information about restaurants near to the main station, information about hotels, information about shops in the gallery of the main station and the like. Instead of providing access information to these enumerated services in combination with one RFID tag for each service, the individual services are summarized in one RFID tag.

The RFID tag information received from the RFID tag reader may additionally comprise accompanying information amending the tag identification sequence which addresses one or more individual services. The accompanying information defines a coding and an addressing of a request message for accessing the one or more services addressed by the tag identification sequence. In detail the accompanying information comprises communication related data to be employed for transmitting the request message. In more detail, the communication related data may specify that the request message shall be coded and transmitted for example via the short message service (SMS) or the multimedia message service (MMS) through the over-the-air (OTA) interface of a PLMN, wherein the communication related data also specifies a corresponding required telephone number which identifies the recipient of the request message. Alternatively, the communication related data may specify that the request message shall be coded and transmitted using HTTP, WAP or any other suitable data communication protocol, wherein the communication related data may also specify an internet protocol (IP) address, a universal resource locator (URL) or a universal resource identifier (URI) which identifies the recipient of the request message. The communication related data may also contribute information like network access point settings, proxy settings etc. which are required for transmitting the request message.

In an operation S 170, a request generation component of the portable terminal 200 is responsible for generating a service request message on the basis of information which results from the parsing of the RFID tag information. The service request message comprises additionally a subscriber identification included by the request generation component and retrieved from a storage component in the portable terminal 200. The subscriber identification may be an identifier of the portable terminal 200 or the user of the portable terminal 200, but is not limited thereto. The subscriber identification shall be understood as an identification sequence which allows to conclude the originator of the service request message, wherein the originator may be the portable terminal 200 or the user of the portable terminal 200.

Conventionally, a mobile communication terminal including an OTA interface to a PLMN such as global system for mobile communication (GSM) or universal mobile telecommunication system (UMTS) includes a subscriber identification module (SIM) which carries a hardware identification code, a user identification code and at least a telephone number, i.e. an international mobile equipment identifier (IMEI), an international mobile subscriber identifier (IMSI) and at least an integrated services digital network (ISDN) number, respectively, which identify uniquely worldwide the portable terminal 200 and the user of the portable terminal 200, respectively. Especially, the telephone number or the international mobile subscriber identifier (IMSI) are suitable to be employed as subscriber identification.

Moreover, a mobile communication terminals including an OTA interface to a PLMN such as analog mobile communication system, code division multiple access (CDMA) and time division multiple access (TDMA) based communication systems includes a terminal (hardware) identification which is associated with the mobile communication terminal. That is, a subscriber identification as required in the present invention may be based on the terminal (hardware) identification or may be provided by a network gateway node operated by the respective PLMN operator. Such a gateway node can be responsible to include a subscriber identification into the service request message conveyed through the gateway node by identifying the originator of the service request message for example on the basis of the terminal (hardware) identification and processing the service request message to include a subscriber identification which may be retrieved in accordance with the identification of the originator of the service request message from a dedicated subscriber information entity.

In view of a portable terminal 200 including a wireless network communication interface such as a WLAN interface or a Bluetooth interface a hardware network interface identification sequence (number) which is assigned to the respective network communication interface and which identifies uniquely worldwide the network communication interface may also be appropriate to be employed as subscriber identification since the hardware network interface identification sequence allows similarly to conclude the originator of the service request message.

However, the subscriber identification may be also an identification sequence which has being assigned at some time before to the portable terminal 200 or the user of the portable terminal 200 by a subscription service, respectively and has being stored in the portable terminal 200 (and in a storage component thereof, respectively) to be employed for the service request message.

Depending on the communication technique employed for coding and transmitting the service request message, the subscriber identification may be included in the payload of the service request message or via context information available in connection with the service request message. For example, the service request message may be coded and transmitted via the short message service (SMS). The subscriber identification shall be based on the telephone number of the mobile communication terminal which transmits the service request message. That is, the telephone number has not to be included in the payload of the service request message since the short message service conveys independently the telephone number as communication context information additionally with the actual payload. In contrast thereto, a service request message coded on the basis of the hypertext transfer protocol (HTTP) may identify the originator by the means of an internet protocol (IP) address which can be assigned dynamically such that the IP address is not adequate for identifying unambiguously the originator. An explicit subscriber identification included in the payload of the service request message is sensible.

Conclusively, the description above referring to the subscriber identification illustrates a broad number of individual applicable identification sequences which all allow to conclude the originator of the service request message and an identity of the originator (portable terminal 200 and user thereof, respectively). The subscriber identification may be included in the payload of the service request message by the generating portable terminal 200 or by a network node being interposed in the transmission path of the service request message. The subscriber identification may be available in communication context information present in parallel to the service request message. The subscriber identification may be based on a actual subscriber information which may be stored in the portable terminal 200 or may be based on any hardware identification provided by the portable terminal 200 and components thereof, respectively. It has to be noted that in view of the illustration above the designation subscriber identification is to be understood as broad as possible and should not be limited to any subscriber identification information required for operating a probable, electronic terminal in a PLMN. The subscriber identification shall be applicable to conclude the originator of the service request message.

In an operation S180, a communication interface of the portable terminal 200 allows to transmit the generated service request message containing at least the tag identification sequence extracted from the RFID tag information and a subscriber identification relevant to the requested service. The service request message is directed to the mediating service provider 300. The communication related data concerning the transmission of the service request message to the mediating service provider 300 may be additionally extracted from the RFID tag information or alternatively may be stored in the portable terminal 200.

In an operation S190, a network serving device operated by the mediating service provider 300 receives the service request message via a data communication interface.

In an operation S200, a parsing component comprised by the network serving device parses the service request message and extracts the contained information, i.e. at least the tag identification sequence and the subscriber identification. As aforementioned the subscriber identification may be extracted from the payload of the received service request message or may be obtained from the message context information.

In an operation S210, an identification component of the network serving device is responsible to determine the individual services which are addressed by the tag identification sequence, to determine the services to which the user is subscribed on the basis of the subscriber identification and which are offered to the user independent from a subscription and to check which of the addressed individual services are covered by the user subscription and which of the addressed individual services are available without user subscription.

It should be noted that in conjunction with the present invention the subscription shall be understood as an agreement of the user (subscriber) to use certain services / applications which may imply an agreement to pay for the use of the subscribed services / applications. The use may be charged by a flat-rate or by an individual fee incurring with individual use e.g. charge by the PLMN provider. The subscription may comprise one or more definitions about one or more classifications designating related services / applications, e.g. a classification may define a theme or subject which comprises several services / applications being of interest for the user (subscriber). The subscription may comprise a period of time within which the services /applications can be used by the user (subscriber), which corresponds to a time flat-rate or the subscription may comprise a number of allowed accesses to the services / application which corresponds to a volume flat-rate.

The services / applications which are managed by the mediating service provider 300 may vary in time, i.e. certain services / applications may be available at certain time and during certain period of time, respectively. Furthermore, the services / applications may change in time, i.e. the services / application themselves may change in time or the service functionality of the services /application may change in time.

More generally, the designation subscription shall be also understood as a (sub-)division of the requestors (i.e. the originators of service request messages identified by the subscriber identifications which identify the requesting portable, electronic terminal and the user thereof in any way in the sense of the aforementioned description of the subscriber identifications, respectively) into a first group and a second group. The first group may be designated as being subscribed whereas the second group may be designated as being not subscribed. A selection of services may be assigned with and available to the first group comprising subscribed group members (requestors). The second group comprising all requestors not being part of the first group may have assigned no services, a different selection of services, a selection of services which are limited in their functionality in comparison to corresponding complete services and the like. For example to illustrate the general designation subscription, a certain service may be available to a number of users which are known before such as customers (subscribers) of a certain PLMN provider operating the PLMN. A limited service may be offered to the other requestors of the this certain service which are not customers. The limited service may be understood and handled as a separate service. For example the limited service is for advertising the service and may be available only during a certain period of time. In view of the example above the services may be subdivided into subscribed services (which requires a subscription) and free services (which do not require a subscription).

For checking the subscription, the services which are addressed by the extracted tag identification sequence are identified. This is, the subscribed services which are subscribed by the user (subscriber) are identified on the basis of the extracted subscriber identification. Moreover this is, the services which are available to the user without being particularly subscribed for example because the user is customer of a certain PLMN provider, because the service is freely accessible to all requestors and the like. The identification of the addressed services and the identification of the subscribed and offered services may include an access to a service and subscription database 400 storing the required information.

In an operation S300, the service and subscription database 400 is accessed to retrieve subscription information concerning the subscriber identified by the subscriber identification. The subscription information may comprise information about one or more services to which the user (subscriber) is subscribed or which are available to the user, a service classification or related subscription definitions pre-defined and provided by the user (subscriber). The retrieving is based on the subscriber identification which has been included into the service request message generated by the portable terminal 200 and which allows to identify the portable terminal 200 and the user of the portable terminal 200, respectively. The database 400 may provide information about single services being subscribed by the user or may provide classification information which allows to identify one or more class of services which are summarized by a subject of theme definition.

In an operation S310, the service and subscription database 400 is accessed to retrieve the services which are addressed by the tag identification sequence. The retrieving may result in one or more services associated with the tag identification sequence which is obtained from the certain RFID tag 100 read-out by the RFID tag reader of the portable terminal 200. The identification of the one or more services associated to the RFID tag 100 which has been read-out is designated as mediating resolving of services, i.e. mediating in the sense of resolving. The database 400 comprises the association information linking tag identification sequence to one or more services. The retrieving of the services on the basis of the tag identification sequence contained in the service request from the database 400 offers a simple method to define and/or modify individual services assigned to the tag identification sequence and add or remove individual services from the association, respectively. Referring back to operation S 140, RFID tag provides a tag identification sequence to the portable terminal 200. The mediation and resolution which concrete individual services assigned to the RFID tag is performed by the database 400, respectively. As an example, the use of the RFID tag in the main station is widely accepted by the passengers. A new cafe will also provide its own service to the passengers which use the services being assigned to the RFID tag. The new service of the cafe is simply assigned to this RFID tag by modifying the information stored in the database 400. No modifications have to be executed to the RFID tag itself.

The checking of the subscription finally includes a checking component in the networked service serving device of the mediating service provider 300 to compares the services identified to be assigned to the RFID tag which is identified on the basis of the tag identification sequence against the subscription information which is retrieved in accordance with the subscription information. The checking may be a one-to-one comparison between the assigned services and subscribed and offered services or the checking may be based on classification information provided by the user to subscribe a class of services. The checking operation results in one or more matching services which will be further handled.

The database 400 is described as a service and subscription database offering information about services assigned to the RFID tag which has been read-out and information about the subscription definitions of the user (subscriber). The combining of both sets of information into one database 400 as explained is not necessary, dedicated databases for each set of information may replace the aforementioned database 400.

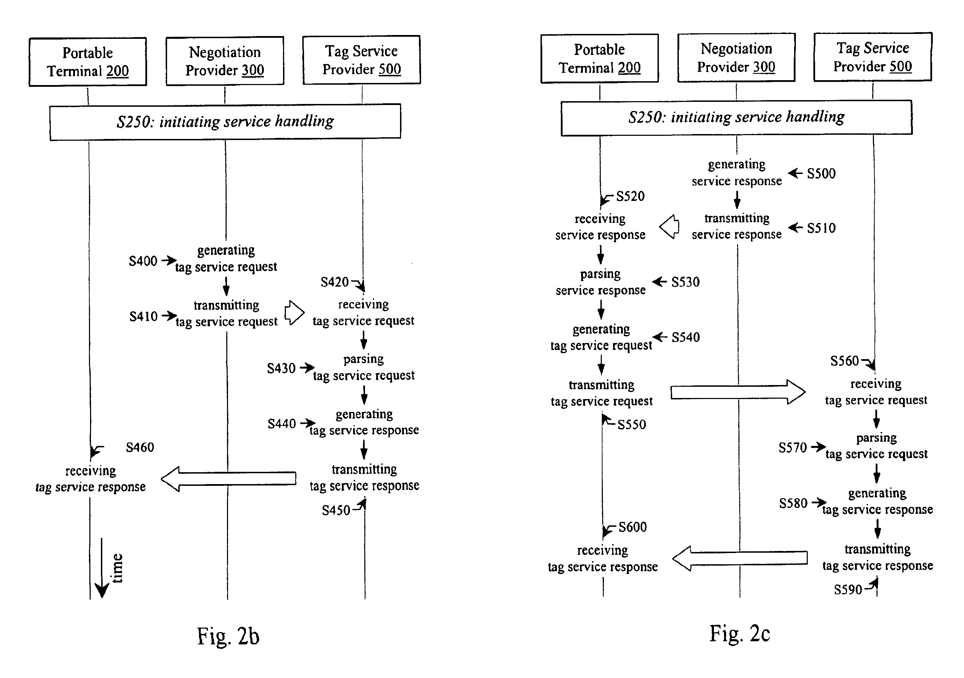

In an operation S250, the mediating service provider 300 finally initiates a handling of the matching services. Operations which are to be performed in conjunction with the matching services will be performed by one or more tag service providers. Example embodiments of the handling of the matching services will be described with respect to Fig. 2b and Fig. 2c. The initiation of a matching service is illustrated in Fig. 2b and Fig. 2c on the basis of one matching service provided and operated by the tag service provider 500. The described initiation operation is applicable to a plurality of matching services provided by one or more tag service providers in an analogous way.

Fig. 2b shows a flow diagram illustrating a first operational sequence being operated in consequence on the operational sequence shown in Fig. 2a according to an embodiment of the present invention. The illustrated operational sequence depicts a direct initiating of one matching service which is provided by the tag service provider 500.

In an operation S400, the network serving device operated by the mediating service provider 300 generates one or more tag service request messages corresponding to the matching services identified in the previous operation S210.

To illustrate the initiation of tag service handling, it may be assumed that a service provided by the tag service provider 500 has been identified as matching. The generated tag service request message is dedicated to initiate that tag service which is originally desired by the user. Therefore, the tag service request contains necessary information required by the addressed tag service provider 500 to perform accordingly its provided service. The necessary information may comprise portable terminal related data, tag service related data, communication related data etc. This set of information may be obtained from the service request message transmitted originally from the portable terminal 200 to the mediating service provider 300 or from the database 400 which stores information about the tag service.

In detail, terminal related data may allow the tag service provider 500 to adapt its service, if necessary, to requirements set by the portable terminal 200, i.e. functionality and capability of the portable terminal 200. The tag service related data may comprise information and data about the RFID tag 100 which has originally supplied the tag identification sequence to the portable terminal 200 on the basis of which the identification of the tag service provider 500 has been performed. In more detail, the tag related data may include geographical position data etc. required by the tag service provider 500 for operating. Alternatively, the tag related data may simply comprise the tag identification sequence and further identifications about the RFID tag 100 is operated by the tag service provider 500. The communication related data may include communication related data concerning the communication with the tag service provider 500 such as communication protocol, address information etc. The communication related data may further comprise data concerning the communication with the portable terminal 200 which shall be addressed as the recipient of information resulting from the service of the tag service provider 500.

In an operation S410, the tag service request message is transmitted from the mediating service provider 300 via the communication interface to the network serving device of the tag service provider 500.

In an operation S420, the network serving device of the tag service provider 500 receives the tag service request message via a communication interface. In operations S430 and S440, the tag service request message is parsed by a parsing component of the network serving device of the tag service provider 500 and a tag service response message is generated in accordance with the service request message and the tag service by a generating component of the network serving device of the tag service provider 500.

In an operation S450, the generated tag service response message is transmitted from the tag service provider 500 to the portable terminal 200.

In an operation S460, the portable terminal 200 receives a tag service response message. The tag service response message comprises information of the tag service 500 which is addressed by the service identification information obtained originally from the RFID tag 100 and to which the user of the portable terminal 200 is subscribed.

Fig. 2c shows a flow diagram illustrating a second operational sequence being operated in consequence on the operational sequence shown in Fig. 2a as an alternative to the operation sequence presented in Fig. 2b according to an embodiment of the present invention.

In an operation S500, the network serving device operated by the mediating service provider 300 generates a service response message which contains information about the services which are previously identified as matching.

To illustrate the initiation of tag service handling, it may be assumed that a service provided by the tag service provider 500 has been identified as matching. The generated service response message is dedicated to initiate that tag service which is originally desired by the user. Therefore, the service response contains necessary information required by the addressed tag service provider 500 to perform accordingly its provided service. The necessary information may comprise portable terminal related data, tag service related data, communication related data etc. This set of information may be obtained from the service request message transmitted originally from the portable terminal 200 to the mediating service provider 300 or from the database 400 which stores information about the tag service. For detailed description of the data refer to the operation S400 shown in Fig. 2b.

In an operation S510, the service response message is transmitted from the network serving device of the mediating service provider 300 to the portable terminal 200. In an operation S520, the portable terminal 200 receives the service response message and parses the service response message in an operation S530. The user of the portable terminal 200 may be allowed to view the results of the service request and may select one or several of the results for the services which shall be processed

In an operation S540, on the basis of the parsed information of step S530, the portable terminal 200 generates a tag service request message to the tag service provider 500, which is transmitted via a communication connection to the tag service provider 500 in an operation S550. The generating and communicating of the tag service request message may be operated in accordance with the tag service related data and further data provided by the mediating service provider 300 and available by the portable terminal 200 in the service response message.

In an operation S560, the network serving device of the tag service provider 500 receives the tag service request message via its communication interface.

In an operation S570 and an operation S580, the tag service request message is parsed and a tag service response message is generated in accordance with the service request message and the tag service. In an operation S590, the generated tag service response message is transmitted from the tag service provider 500 to the portable terminal 200.

In an operation S600, the portable terminal 200 receives a tag service response message. The tag service response message comprises information of the tag service 500 which is addressed by the service identification information obtained originally from the RFID tag 100 and to which the user of the portable terminal 200 is subscribed. The information may be displayed to the user.

It will be obvious for those skilled in the art that as the technology advances, the inventive concept can be implemented in a broad number of ways. The invention and its embodiments are thus not limited to the examples described above but may vary within the scope of the claims.

## Claims

1. Network serving device for mediating networked services, comprising:
- an interface component for receiving a service request message from a portable, electronic terminal (200), wherein said service request message comprises at least a tag identification sequence and a subscriber identification, wherein said tag identification sequence has been received from a radio frequency identification tag;
- a selection component for selecting one or more services in accordance with said tag identification sequence and said subscriber identification;
wherein
- said interface component is adapted for establishing a connection between said portable, electronic terminal (200) and at least one tag service provider (500) associated with said one or more selected services for operating said one or more selected services; and
wherein said selection component comprises:
- a service retrieving component for obtaining service information associated with said tag identification sequence;
- a subscription retrieving component for obtaining subscription information associated with said subscriber identification; and
- a checking component for comparing said service information with said subscription information to select one or more subscribed services.

2. Network serving device according to claim 1, wherein:
- said service retrieving component is adapted to access a service data storage (400); wherein said service data storage (400) comprises a plurality of service information which are associated with at least one tag identification sequence for retrieval; and
- said subscription retrieving component is adapted to access a subscription data storage (400); wherein said subscription data storage (400) comprises a plurality of subscription information which is associated with at least one subscriber identification for retrieval.

3. Network serving device according to anyone of the preceding claims, wherein said subscription information comprises classification information which relates to at least one class of services.

4. Network serving device according to anyone of the preceding claims, wherein said interface component for establishing a connection relating to said one or more selected services is adapted to transmit an initiation request to said at least one tag service provider (500).

5. System for mediating networked services, comprising:
at least one portable, electronic terminal (200), comprising:
- a subscriber identification;
- a radio frequency identification tag reader for receiving a tag identification sequence for a radio frequency identification tag;
- a generating component for generating a service request message in accordance with said tag identification sequence and said subscriber information; wherein said service request message comprises said tag identification sequence and said subscriber information; and
- an interface component for transmitting said service request message to a mediating service provider (300) for establishing a connection to at least one tag service provider (500) for operating one or more subscribed services; and
a network serving device constituting said mediating service provider (300), comprising:
- an interface component for receiving a service request message from said portable, electronic terminal (200); wherein said service request message comprises said tag identification sequence and said subscriber identification; and
- a selection component for selecting one or more services in accordance with said tag identification sequence and said subscriber identification; wherein
- said interface is adapted for establishing said connection between said portable, electronic terminal (200) and said at least one tag service provider (500) associated with said one or more selected services for operating said one or more selected services;
wherein said selection component comprises:
- a service retrieving component for obtaining service information associated with said tag identification sequence;
- a subscription retrieving component for obtaining subscription information associated with said subscriber identification; and
- a checking component for comparing said service information with said subscription information to select one or more subscribed services.

6. Method for mediating networked services by a mediating service provider (300) comprising:
- receiving a service request message from a portable, electronic terminal (200), wherein said service request message comprises at least a tag identification sequence and a subscriber identification; wherein said tag identification sequence has been received from a radio frequency identification tag;
- selecting one or more services in accordance with said tag identification sequence and said subscriber identification; and
- establishing a connection between said portable, electronic terminal (200) and at least one tag service provider (500) associated with said one or more selected services for operating said one or more selected services;
wherein said selecting comprises:
- retrieving service information associated with said tag identification sequence;
- retrieving subscription information associated with said subscriber identification; and
- comparing said service information with said subscription information to select one or more subscribed services.

7. Method according to claim 6, wherein
- said retrieving of service information comprises accessing a service data storage (400); wherein said service data storage (400) comprises a plurality of service information which is associated with at least one tag identification sequence for retrieval; and wherein
- said retrieving of subscription information comprises accessing a subscription data storage (400); wherein said subscription data storage (400) comprises a plurality of subscription information which is associated with at least one subscriber identification for retrieval.

8. Method according to anyone of the claims 6 to 7, wherein said subscription information comprises classification information which relates to at least one class of services.

9. Method according to anyone of the claims 6 to 8, wherein said establishing comprises:
- transmitting an initiation request to said at least one tag service provider (500).

10. Method for mediating networked services by a mediating service provider (300) to a portable, electronic terminal (200), comprising
- receiving at least a tag identification sequence from a radio frequency identification tag by a radio frequency identification tag reader connected to said portable, electronic terminal (200);
- generating a service request message in accordance with said tag identification sequence and subscriber information;
- transmitting said service request message from said portable, electronic terminal (200) to a mediating service provider (300);
- receiving said service request message from said portable, electronic terminal (200) by said mediating service provider (300);
- selecting one or more services in accordance with said tag identification sequence and said subscriber identification; and
- establishing a connection by said mediating service provider (300) between said portable, electronic terminal (200) and at least one tag service provider (500) associated with said one or more selected services for operating said with said one or more selected services;
wherein said selecting comprises:
- retrieving service information associated with said tag identification sequence;
- retrieving subscription information associated with said subscriber identification; and
- comparing said service information with said subscription information to select one or more subscribed services.

11. Computer program product for mediating networked services, comprising loadable program code sections for carrying out the operations of any one of the claims 6 to 10, when said program code is executed on a microprocessor based component, a processing device, a terminal device, a communication terminal device, a serving device or a networked device.

12. Computer readable medium, comprising a computer program product for mediating networked services, said computer program product comprising program code sections for carrying out the method of any one of the claims 6 to 10, when said computer program product is executed on a microprocessor based component, a processing device, a terminal device, a communication terminal device, a serving device or a networked device.

13. Computer data signal embodied in a carrier wave and representing instructions which when executed by a processor cause the steps of anyone of claims 6 to 10 to be carried out.

## Patentansprüche

1. Netzwerkbedienende Vorrichtung zum Vermitteln von vernetzten Diensten, die Folgendes umfasst:
- eine Schnittstellenkomponente zum Empfangen einer Dienstanforderungsnachricht von einem portablen, elektronischen Endgerät (200), wobei die Dienstanforderungsnachricht mindestens eine Transponder-Identifikationssequenz und eine Teilnehmeridentifikation umfasst, wobei die Transponder-Identifikationssequenz von einem Funkfrequenzidentifikationstransponder kommend empfangen wurde;
- eine Auswahlkomponente zum Auswählen eines oder mehrerer Dienste entsprechend der Transponder-Identifikationssequenz und der Teilnehmeridentifikation;
wobei
- die Schnittstellenkomponente dafür ausgelegt ist, eine Verbindung zwischen dem portablen, elektronischen Endgerät (200) und mindestens einem Transponder-Dienstanbieter (500), der dem einen oder den mehreren ausgewählten Diensten zugeordnet ist, herzustellen, um den einen oder die mehreren ausgewählten Dienste auszuführen; und
wobei die Auswahlkomponente Folgendes umfasst:
- eine Dienstabrufkomponente zum Erhalten von Dienstinformationen, die der Transponder-Identifikationssequenz zugeordnet sind;
- eine Anschlussabrufkomponente zum Erhalten von Anschlussinformationen, die der Teilnehmeridentifikation zugeordnet sind; und
- eine Überprüfungskomponente zum Vergleichen der Dienstinformationen mit den Anschlussinformationen zum Auswählen eines oder mehrerer angemeldeter Dienste.

2. Netzwerkbedienende Vorrichtung nach Anspruch 1, wobei:
- die Dienstabrufkomponente dafür ausgelegt ist, auf einen Dienstdatenspeicher (400) zuzugreifen; wobei der Dienstdatenspeicher (400) mehrere Dienstinformationen umfasst, die mindestens einer Transponder-Identifikationssequenz zum Abrufen zugeordnet sind; und
- die Anschlussabrufkomponente dafür ausgelegt ist, auf einen Anschlussdatenspeicher (400) zuzugreifen; wobei der Anschlussdatenspeicher (400) mehrere Anschlussinformationen umfasst, die mindestens einer Teilnehmeridentifikation zum Abrufen zugeordnet sind.

3. Netzwerkbedienende Vorrichtung nach einem der vorangehenden Ansprüche, wobei die Anschlussinformationen Klassifizierungsinformationen umfassen, die sich auf mindestens eine Klasse von Diensten beziehen.

4. Netzwerkbedienende Vorrichtung nach einem der vorangehenden Ansprüche, wobei die Schnittstellenkomponente zum Herzustellen einer Verbindung bezüglich des einen oder der mehreren ausgewählten Dienste dafür ausgelegt ist, eine Initiierungsaufforderung an den mindestens einen Transponder-Dienstanbieter (500) zu senden.

5. System zum Vermitteln von vernetzten Diensten, das Folgendes umfasst:
mindestens ein portables, elektronisches Endgerät (200), das Folgendes umfasst:
- eine Teilnehmeridentifikation;
- ein Funkfrequenzidentifikationstransponder-Lesegerät zum Empfangen einer Transponder-Identifikationssequenz für einen Funkfrequenzidentifikationstransponder;
- eine Generierungskomponente zum Generieren einer Dienstanforderungsnachricht entsprechend der Transponder-Identifikationssequenz und den Teilnehmerinformationen; wobei die Dienstanforderungsnachricht die Transponder-Identifikationssequenz und die Teilnehmerinformationen umfasst; und
- eine Schnittstellenkomponente zum Senden der Dienstanforderungsnachricht an einen Vermittlungsdienstanbieter (300) zum Herzustellen einer Verbindung zu mindestens einem Transponder-Dienstanbieter (500) zum Ausführen eines oder mehrerer angemeldeter Dienste; und
eine netzwerkbedienende Vorrichtung, die den Vermittlungsdienstanbieter (300) darstellt und Folgendes umfasst:
- eine Schnittstellenkomponente zum Empfangen einer Dienstanforderungsnachricht von dem portablen, elektronischen Endgerät (200); wobei die Dienstanforderungsnachricht die Transponder-Identifikationssequenz und die Teilnehmeridentifikation umfasst; und
- eine Auswahlkomponente zum Auswählen eines oder mehrerer Dienste entsprechend der Transponder-Identifikationssequenz und der Teilnehmeridentifikation; wobei
- die Schnittstelle dafür ausgelegt ist, die Verbindung zwischen dem portablen, elektronischen Endgerät (200) und dem mindestens einen Transponder-Dienstanbieter (500), der dem einen oder den mehreren ausgewählten Diensten zugeordnet ist, herzustellen, um den einen oder die mehreren ausgewählten Dienste auszuführen;
wobei die Auswahlkomponente Folgendes umfasst:
- eine Dienstabrufkomponente zum Erhalten von Dienstinformationen, die der Transponder-Identifikationssequenz zugeordnet sind;
- eine Anschlussabrufkomponente zum Erhalten von Anschlussinformationen, die der Teilnehmeridentifikation zugeordnet sind; und
- eine Überprüfungskomponente zum Vergleichen der Dienstinformationen mit den Anschlussinformationen zum Auswählen eines oder mehrerer angemeldeter Dienste.

6. Verfahren zum Vermitteln von vernetzten Diensten durch einen Vermittlungsdienstanbieter (300), das Folgendes umfasst:
- Empfangen einer Dienstanforderungsnachricht von einem portablen, elektronischen Endgerät (200), wobei die Dienstanforderungsnachricht mindestens eine Transponder-Identifikationssequenz und eine Teilnehmeridentifikation umfasst; wobei die Transponder-Identifikationssequenz von einem Funkfrequenzidentifikationstransponder kommend empfangen wurde;
- Auswählen eines oder mehrerer Dienste entsprechend der Transponder-Identifikationssequenz und der Teilnehmeridentifikation; und
- Herstellen einer Verbindung zwischen dem portablen, elektronischen Endgerät (200) und mindestens einem Transponder-Dienstanbieter (500), der dem einen oder den mehreren ausgewählten Diensten zugeordnet ist, um den einen oder die mehreren ausgewählten Dienste auszuführen;
wobei das Auswählen Folgendes umfasst:
- Abrufen von Dienstinformationen, die der Transponder-Identifikationssequenz zugeordnet sind;
- Abrufen von Anschlussinformationen, die der Teilnehmeridentifikation zugeordnet sind; und
- Vergleichen der Dienstinformationen mit den Anschlussinformationen zum Auswählen eines oder mehrerer angemeldeter Dienste.

7. Verfahren nach Anspruch 6, wobei
- das Abrufen von Dienstinformationen das Zugreifen auf einen Dienstdatenspeicher (400) umfasst; wobei der Dienstdatenspeicher (400) mehrere Dienstinformationen umfasst, die mindestens einer Transponder-Identifikationssequenz zum Abrufen zugeordnet sind; und wobei
- das Abrufen von Anschlussinformationen das Zugreifen auf einen Anschlussdatenspeicher (400) umfasst; wobei der Anschlussdatenspeicher (400) mehrere Anschlussinformationen umfasst, die mindestens einer Teilnehmeridentifikation zum Abrufen zugeordnet sind.

8. Verfahren nach einem der Ansprüche 6 und 7, wobei die Anschlussinformationen Klassifizierungsinformationen umfassen, die sich auf mindestens eine Klasse von Diensten beziehen.

9. Verfahren nach einem der Ansprüche 6 bis 8, wobei das Herstellen Folgendes umfasst:
- Senden einer Initiierungsaufforderung an den mindestens einen Transponder-Dienstanbieter (500) .

10. Verfahren zum Vermitteln von vernetzten Diensten durch einen Vermittlungsdienstanbieter (300) an ein portables, elektronisches Endgerät (200), wobei das Verfahren Folgendes umfasst:
- Empfangen mindestens einer Transponder-Identifikationssequenz von einem Funkfrequenzidentifikationstransponder durch ein Funkfrequenzidentifikationstransponder-Lesegerät, das mit dem portablen, elektronischen Endgerät (200) verbunden ist;
- Generieren einer Dienstanforderungsnachricht entsprechend der Transponder-Identifikationssequenz und den Teilnehmerinformationen;
- Senden der Dienstanforderungsnachricht von dem portablen, elektronischen Endgerät (200) an einen Vermittlungsdienstanbieter (300);
- Empfangen die Dienstanforderungsnachricht von dem portablen, elektronischen Endgerät (200) durch den Vermittlungsdienstanbieter (300);
- Auswählen eines oder mehrerer Dienste entsprechend der Transponder-Identifikationssequenz und der Teilnehmeridentifikation; und
- Herstellen einer Verbindung durch den Vermittlungsdienstanbieter (300) zwischen dem portablen, elektronischen Endgerät (200) und mindestens einem Transponder-Dienstanbieter (500), der dem einen oder den mehreren ausgewählten Diensten zugeordnet ist, zum Ausführen des einen oder der mehreren ausgewählten Dienste;
wobei das Auswählen Folgendes umfasst:
- Abrufen von Dienstinformationen, die der Transponder-Identifikationssequenz zugeordnet sind;
- Abrufen von Anschlussinformationen, die der Teilnehmeridentifikation zugeordnet sind; und
- Vergleichen der Dienstinformationen mit den Anschlussinformationen zum Auswählen eines oder mehrerer angemeldeter Dienste.

11. Computerprogrammprodukt zum Vermitteln von vernetzten Diensten, das ladbare Programmcode-Abschnitte umfasst, um die Arbeitsschritte nach einem der Ansprüche 6 bis 10 abzuarbeiten, wenn der Programmcode in einer mikroprozessorbasierten Komponente, einem Verarbeitungsgerät, einem Endgerät, einem Kommunikationsendgerät, einer Servervorrichtung oder einem vernetzten Gerät ausgeführt wird.

12. Computerlesbares Medium, das ein Computerprogrammprodukt zum Vermitteln von vernetzten Diensten umfasst, wobei das Computerprogrammprodukt Programmcode-Abschnitte umfasst, um das Verfahren nach einem der Ansprüche 6 bis 10 abzuarbeiten, wenn das Computerprogrammprodukt in einer mikroprozessorbasierten Komponente, einem Verarbeitungsgerät, einem Endgerät, einem Kommunikationsendgerät, einer Servervorrichtung oder einem vernetzten Gerät ausgeführt wird.

13. Computerdatensignal, das in einer Trägerwelle verkörpert ist und Instruktionen darstellt, die, wenn sie durch einen Prozessor ausgeführt werden, die Abarbeitung der Schritte nach einem der Ansprüche 6 bis 10 veranlassen.

## Revendications

1. Dispositif serveur de réseau assurant la médiation de services offerts par un réseau, comprenant :
- un composant d'interface pour recevoir un message de demande de service d'un terminal électronique portable (200), dans lequel ledit message de demande de service comprend au moins une séquence d'identification d'étiquette et une identification d'abonné, dans lequel ladite séquence d'identification d'étiquette a été reçue à partir d'une étiquette d'identification de radiofréquence ;
- un composant de sélection pour sélectionner un ou plusieurs services en fonction de ladite séquence d'identification d'étiquette et de ladite identification d'abonné ;
dans lequel
- ledit composant d'interface est apte à établir une connexion entre ledit terminal électronique portable (200) et au moins un prestataire de services d'étiquette (500) associé aux dits un ou plusieurs services sélectionnés pour utiliser lesdits un ou plusieurs services sélectionnés ; et
dans lequel ledit composant de sélection comprend :
- un composant d'extraction de service pour obtenir des informations de service associées à ladite séquence d'identification d'étiquette ;
- un composant d'extraction d'abonnement pour obtenir des informations d'abonnement associées à ladite identification d'abonné ; et
- un composant de contrôle pour comparer lesdites informations de service aux dites informations d'abonnement pour sélectionner un ou plusieurs services d'abonné.

2. Dispositif serveur de réseau selon la revendication 1, dans lequel :
- ledit composant d'extraction de service est apte à accéder à un stockage de données de service (400) ; dans lequel ledit stockage de données de service (400) comprend une pluralité d'informations de service qui sont associées à au moins une séquence d'identification d'étiquette pour leur extraction ; et
- ledit composant d'extraction d'abonnement est apte à accéder à un stockage de données d'abonnement (400) ; dans lequel ledit stockage de données d'abonnement (400) comprend une pluralité d'informations d'abonnement qui sont associées à au moins une identification d'abonné pour leur extraction.

3. Dispositif serveur de réseau selon l'une quelconque des revendications précédentes, dans lequel lesdites informations d'abonnement comprennent des informations de classification qui concernent au moins une catégorie de services.

4. Dispositif serveur de réseau selon l'une quelconque des revendications précédentes, dans lequel ledit composant d'interface pour établir une connexion relative aux dits un ou plusieurs services sélectionnés est apte à transmettre une demande d'initiation au dit au moins un prestataire de services d'étiquette (500).

5. Système assurant la médiation de services offerts par un réseau, comprenant :
au moins un terminal électronique portable (200), comprenant :
- une identification d'abonné ;
- un lecteur d'étiquette d'identification de radiofréquence pour recevoir une séquence d'identification d'étiquette pour une étiquette d'identification de radiofréquence ;
- un composant de génération pour générer un message de demande de service en fonction de ladite séquence d'identification d'étiquette et desdites informations d'abonné ; dans lequel ledit message de demande de service comprend ladite séquence d'identification d'étiquette et lesdites informations d'abonné ; et
- un composant d'interface pour transmettre ledit message de demande de service à un prestataire de services de médiation (300) pour établir une connexion à au moins un prestataire de services d'étiquette (500) pour utiliser un ou plusieurs services d'abonné ; et
un dispositif serveur de réseau constituant ledit prestataire de services de médiation (300), comprenant :
- un composant d'interface pour recevoir un message de demande de service dudit terminal électronique portable (200) ; dans lequel ledit message de demande de service comprend ladite séquence d'identification d'étiquette et ladite identification d'abonné, et
- un composant de sélection pour sélectionner un ou plusieurs services en fonction de ladite séquence d'identification d'étiquette et de ladite identification d'abonné ; dans lequel
- ladite interface est apte à établir ladite connexion entre ledit terminal électronique portable (200) et ledit au moins un prestataire de services d'étiquette (500) associé aux dits un ou plusieurs services sélectionnés pour utiliser lesdits un ou plusieurs services sélectionnés ;
dans lequel ledit composant de sélection comprend :
- un composant d'extraction de service pour obtenir des informations de service associées à ladite séquence d'identification d'étiquette ;
- un composant d'extraction d'abonnement pour obtenir des informations d'abonnement associées à ladite identification d'abonné ; et
- un composant de contrôle pour comparer lesdites informations de service aux dites informations d'abonnement pour sélectionner un ou plusieurs services d'abonné.

6. Procédé pour assurer la médiation de services offerts par un réseau par un prestataire de services de médiation (300), comprenant :
- la réception d'un message de demande de service d'un terminal électronique portable (200), dans lequel ledit message de demande de service comprend au moins une séquence d'identification d'étiquette et une identification d'abonné ; dans lequel ladite séquence d'identification d'étiquette a été reçue à partir d'une étiquette d'identification de radiofréquence ;
- la sélection d'un ou plusieurs services en fonction de ladite séquence d'identification d'étiquette et de ladite identification d'abonné ; et
- l'établissement d'une connexion entre ledit terminal électronique portable (200) et au moins un prestataire de services d'étiquette (500) associé aux dits un ou plusieurs services sélectionnés pour utiliser lesdits un ou plusieurs services sélectionnés ;
dans lequel ladite sélection comprend :
- l'extraction d'informations de service associées à ladite séquence d'identification d'étiquette ;
- l'extraction d'informations d'abonnement associées à ladite identification d'abonné ; et
- la comparaison desdites informations de service aux dites informations d'abonnement pour sélectionner un ou plusieurs services d'abonné.

7. Procédé selon la revendication 6, dans lequel :
- ladite extraction d'informations de service comprend l'accès à un stockage de données de service (400) ; dans lequel ledit stockage de données de service (400) comprend une pluralité d'informations de service qui sont associées à au moins une séquence d'identification d'étiquette pour leur extraction ; et dans lequel
- ladite extraction d'informations d'abonnement comprend l'accès à un stockage de données d'abonnement (400) ; dans lequel ledit stockage de données d'abonnement (400) comprend une pluralité d'informations d'abonnement qui sont associées à au moins une identification d'abonné pour leur extraction.

8. Procédé selon l'une quelconque des revendications 6 et 7, dans lequel lesdites informations d'abonnement comprennent des informations de classification qui concernent au moins une catégorie de services.

9. Procédé selon l'une quelconque des revendications 6 à 8, dans lequel ledit établissement comprend :
- la transmission d'une demande d'initiation au dit au moins un prestataire de services d'étiquette (500).

10. Procédé pour assurer la médiation de services offerts par un réseau par un prestataire de services de médiation (300) à un terminal électronique portable (200), comprenant :
- la réception d'au moins une séquence d'identification d'étiquette d'une étiquette d'identification de radiofréquence par un lecteur d'étiquette d'identification de radiofréquence connecté au dit terminal électronique portable (200) ;
- la génération d'un message de demande de service en fonction de ladite séquence d'identification d'étiquette et d'informations d'abonné ;
- la transmission dudit message de demande de service dudit terminal électronique portable (200) à un prestataire de services de médiation (300) ;
- la réception dudit message de demande de service dudit terminal électronique portable (200) par ledit prestataire de services de médiation (300) ;
- la sélection d'un ou plusieurs services en fonction de ladite séquence d'identification d'étiquette et de ladite identification d'abonné ; et
- l'établissement d'une connexion par ledit prestataire de services de médiation (300) entre ledit terminal électronique portable (200) et au moins un prestataire de services d'étiquette (500) associé aux dits un ou plusieurs services sélectionnés pour utiliser lesdits un ou plusieurs services sélectionnés ;
dans lequel ladite sélection comprend :
- l'extraction d'informations de service associées à ladite séquence d'identification d'étiquette ;
- l'extraction d'informations d'abonnement associées à ladite identification d'abonné ; et
- la comparaison desdites informations de service aux dites informations d'abonnement pour sélectionner un ou plusieurs services d'abonné.

11. Produit de programme informatique pour assurer la médiation de services offerts par un réseau, comprenant des sections de code de programme chargeables pour effectuer les opérations selon l'une quelconque des revendications 6 à 10, lorsque ledit code de programme est exécuté sur un composant basé sur microprocesseur, un dispositif de traitement, un dispositif terminal, un dispositif terminal de communication, un dispositif serveur ou un dispositif en réseau.

12. Support lisible par ordinateur, comprenant un produit de programme informatique pour assurer la médiation de services offerts par un réseau, ledit produit de programme informatique comprenant des sections de code de programme pour effectuer le procédé selon l'une quelconque des revendications 6 à 10, lorsque ledit produit de programme informatique est exécuté sur un composant basé sur microprocesseur, un dispositif de traitement, un dispositif terminal, un dispositif terminal de communication, un dispositif serveur ou un dispositif en réseau.

13. Signal de données d'ordinateur concrétisé dans une onde porteuse et représentant des instructions qui, lorsqu'elles sont exécutées par un processeur, amènent les étapes selon l'une quelconque des revendications 6 à 10 à être effectuées.
